# EUROPÄISCHE PATENTANMELDUNG

(11) **EP 0 648 432 A1**
(43) Veröffentlichungstag der Anmeldung: **19.04.1995**
(21) Anmeldenummer: 94890163.2
(22) Anmeldetag: 10.10.1994
(51) Int. Cl.: A23N 7/02, A23N 15/06

(54) **Eine Tourniermaschine für Kartoffeln und Gemüse**

(30) Priorität: 15.10.1993 AT 2069/93
(71) Anmelder: Waldner, Wilfried, A-9622 Weissbriach 88 (AT)
(72) Erfinder: Waldner, Wilfried, A-9622 Weissbriach 88 (AT)

(57) **Zusammenfassung**

Eine Vorrichtung zur materialabhebenden Bearbeitung der Oberfläche von Kartoffeln (5) weist eine Aufgabestation (1) auf, wo die Kartoffeln (5) in Aufnahmen (6) auf einem Förderband (7) eingelegt werden, das die Kartoffeln (5) schrittweise zu einer ersten Schneidestation (2) transportiert, wo die Kartoffeln (5) an gegenüberliegenden Seiten beschnitten werden. An diesen Seiten erfolgt anschließend ein Einspannen der Kartoffeln (5) durch eine Einspanneinrichtung (11), mittels welcher die Kartoffeln (5) zu einer zweiten Schneidestation (4) weiterbewegt und gleichzeitig verdreht werden. In der zweiten Schneidestation (5) erfolgt eine materialabhebende Bearbeitung der Oberfläche der Kartoffeln (5) zwischen den eingespannten Seiten, so daß diese letztlich ein tonnenähnliches Aussehen besitzen.

## Beschreibung

Die Erfindung betrifft eine Vorrichtung zur materialabhebenden Bearbeitung der Oberfläche von Gemüsestücken, insbesondere von Kartoffeln, mittels Schneideeinrichtungen.

Vor allem in Restaurants werden häufig Gemüsestücken, insbesondere Kartoffeln, eine besondere tonnenförmige Form verliehen. Die hiezu erforderliche materialabhebende Bearbeitung der Oberfläche wurde bisher händisch vorgenommen, was einen entsprechenden Arbeitsaufwand erforderlich machte. Auch andere Gemüsestücke, beispielsweise Karotten, Kohlrüben und rote Rüben, werden in der Regel oberflächenbearbeitet, um ein formschönes Aussehen zu erzielen.

Die vorliegende Erfindung hat sich zur Aufgabe gestellt, eine Vorrichtung der eingangs beschriebenen Art zu schaffen, die es ermöglicht, die materialabhebende Bearbeitung derartiger Gemüsestücke maschinell vorzunehmen und dadurch Arbeitskräfte einzusparen. Zur Lösung dieser Aufgabe schlägt die Erfindung vor, daß, vorzugsweise in Taktschritten bewegbare, Transporteinrichtungen für den Transport der Gemüsestücke von einer Aufgabestation zu einer ersten Schneidestation, einer Einspannstation und einer zweiten Schneidestation vorgesehen sind, wobei die erste Schneidestation zwei Schneideeinrichtungen zum Beschneiden jedes Gemüsestückes an gegenüberliegenden Seiten, die Einspannstation eine Betätigungseinrichtung für eine mit Spannflächen an diesen gegenüberliegenden Seiten zur Anlage gelangende Einspannvorrichtung, über welche der Weitertransport der Gemüsestücke erfolgt, und die zweite Schneidestation eine weitere Schneideeinrichtung zum Beschneiden der zwischen den in der ersten Schneidestation beschnittenen Seiten befindlichen Oberfläche der Gemüsestücke aufweist. In der ersten Schneidestation werden die Gemüsestücke an einander gegenüberliegenden Seiten beschnitten und dadurch Flächen geschaffen, an welchen die Spannflächen einer Einspanneinrichtung anliegen. Außerdem wird hiedurch den verschiedengroßen Gemüsestücken eine einheitliche Länge erteilt. Die Einspannvorrichtung ermöglicht es, die seitlich beschnittenen Gemüseteile zur zweiten Schneidestation weiterzutransportieren, wo die Bearbeitung der restlichen Oberfläche der Gemüsestücke erfolgt. Diese zweite Schneidestation ist so ausgebildet, daß die Gemüsestücke nach ihrer Bearbeitung die gewünschte Form, beispielsweise eine zylindrische oder tonnenförmige Gestalt, aufweisen.

Die Transporteinrichtung für den Weitertransport der Gemüsestücke von der Aufgabestation zu der ersten Schneidestation und der Einspannstation weist vorzugsweise in Förderrichtung umlaufende Aufnahmen für die Gemüsestücke auf. Diese Aufnahmen müssen so bemessen sein, daß die unbearbeiteten Gemüsestücke hineinpassen, ohne zu klemmen. Andererseits dürfen diese Gemüsestücke auch nicht zu klein sein, da sonst keine vollständige Bearbeitung erfolgt.

Gemäß einem weiteren Merkmal der Erfindung bestehen die Schneideeinrichtungen der ersten Schneidestation aus senkrecht zur Förderrichtung auf- und abbewegbaren Messern, wobei zwischen diesen Messern ein, vorzugsweise durch eine Feder belasteter, Niederhalter vorgesehen ist, durch den die Gemüsestücke während des Beschneidens durch die auf- und abbewegbaren Messer gegen den Boden der Aufnahme gedrückt und dadurch festgehalten werden, so daß sie nicht verrutschen.

Um eine allseitige Bearbeitung der restlichen Oberfläche der Gemüsestücke zwischen den beiden in der ersten Schneidestation hergestellten Schnitten in mehreren Etappen sicherzustellen, ist gemäß einer bevorzugten Ausführungsform der Erfindung die Einspanneinrichtung um eine senkrecht zu den Spannflächen verlaufende Achse drehbar gelagert und es besteht die Schneideeinrichtung der zweiten Schneidestation aus wenigstens einem Messer, das in verschiedenen Drehstellungen wenigstens eines Gemüseteiles zur Bearbeitung der Oberfläche desselben bewegbar ist. Diese Ausführungsform ermöglicht es, die eingespannten Gemüsestücke schrittweise um einen vorbestimmten Winkel zu verdrehen und in der jeweiligen Drehstellung durch das oder die Messer der Schneideeinrichtung in der zweiten Schneidestation, so daß durch entsprechende Materialabnahme die gewünschte Form erzielbar ist.

Die Spannflächen der Einspanneinrichtung sind vorzugsweise mit abstehenden Ansätzen versehen, die in Lagerbüchsen drehbar und in axialer Richtung verschiebbar gelagert sind und die mit Antriebsmitteln für die Drehung der Spannflächen versehen sind. Diese Ausführungsform ermöglicht auf einfache Weise ein Einspannen der Gemüseteile an den beiden in der ersten Schneidestation beschnittenen Seiten und ein anschließendes Verdrehen der Gemüsestücke zwecks Bearbeitung der restlichen Oberfläche in der zweiten Schneidestation. Weiters wird ein einfaches Zusammenwirken der Betätigungseinrichtung der Spannstation mit der Einspanneinrichtung dadurch ermöglicht, daß diese Betätigungseinrichrung an den freien Enden der von den Spannflächen abstehenden Ansätze eingreift. Zweckmäßig ist hiebei die Betätigungseinrichtung der Spannstation von Elektromagneten gebildet, deren Stößel mit den freien Enden der Ansätze zusammenwirken.

Eine einfache Ausführungsform der erfindungsgemäßen Vorrichtung ergibt sich dann, wenn die Antriebsmittel für die Drehung der Spannflächen Zahnräder aufweisen, die mit den von den Spannflächen abstehenden Ansätzen drehfest, jedoch vorzugsweise in axialer Richtung verschiebbar verbunden sind und die in ortsfest angeordnete Zahnstangen eingreifen. Diese Ausführungsform stellt eine Drehbewegung der Spannflächen und damit auch der zwischen den Spannflächen eingespannten Gemüsestücke synchron zum Vorschub durch die Transportvorrichtung sicher und es bedarf für die Durchführung der Drehbewegung keines gesonderten Antriebes, da sich die Zahnräder durch den Eingriff in die ortsfesten Zahnstangen entsprechend des Vorschubes verdrehen.

Wie bereits erwähnt, wird die Einspanneinrichtung in der Einspannstation durch eine Betätigungseinrichtung aktiviert. In der Folge muß dafür Sorge getragen werden, daß die Einspanneinrichtung in einer Lage verbleibt, in der eine sichere Fixierung der Gemüsestücke erfolgt, solange, bis die Bearbeitung der Oberfläche abgeschlossen ist. Im Anschluß daran soll die Einspanneinrichtung gelöst werden, damit die bearbeiteten Gemüsestücke beispielsweise über eine Rutsche od.dgl. in einen Behälter fallen können. Dies wird dadurch erzielt, daß gemäß einem weiteren Merkmal der Erfindung die freien Enden der Ansätze mit an die Betätigungseinrichtung der Spannstation in Förderrichtung anschließenden Führungsschienen zusammenwirken. Diese Führungsschienen sind so geformt, daß zunächst die erforderliche Einspannung der Gemüsestücke sichergestellt ist, bis die Bearbeitung der Oberfläche abgeschlossen ist, und anschließend die Einspanneinrichtung gelöst wird, so daß die fertigbearbeiteten Gemüsestücke freigegeben werden.

Der Vorschub der in aufeinanderfolgenden Einspanneinrichtungen eingespannten Gemüsestücke zur zweiten Schneidestation erfolgt zweckmäßig dadurch, daß die Lagerbüchsen für die Ansätze an einem Förderband, einer Förderkette od.dgl. festgelegt sind. Dieses Förderband bzw. diese Förderkette od.dgl. wird in Taktschritten durch geeignete Antriebseinrichtungen vorwärtsbewegt und zwar synchron mit der den Transport der Gemüsestücke von der Aufgabestation zur ersten Schneidestation bzw. zur Einspannstation bewirkenden, die Aufnahmen aufweisenden Transporteinrichtung. Nach jedem Taktschritt stehen die Transporteinrichtungen während einer Zeitphase still, in der die Bearbeitung vorgenommen wird, und zwar das Beschneiden der gegenüberliegenden Seitenflächen in der ersten Schneidestation und Einspannen der so beschnittenen Gemüsestücke in der Einspannstation und die Bearbeitung der Gemüsestücke in einer Winkelstellung in der zweiten Schneidestation.

Gemäß einer zweckmäßigen Ausführungsform der Erfindung weist die Schneideeinrichtung der zweiten Schneidestation zwei Messer auf, die an gegenüberliegenden Seiten der Gemüsestücke vorgesehen und entlang einer ortsfesten, beispielsweise bogenförmigen Führung quer zur Förderrichtung verschiebbar geführt sind. Durch ein Verschieben dieser beiden Messer werden in jeder Winkelstellung der Gemüsestücke zwei gegenüberliegende Seiten derselben an ihrer Oberfläche bearbeitet, so daß nach Durchlaufen sämtlicher Winkelstellungen eine Bearbeitung der gesamten Oberfläche der Gemüsestücke erfolgt ist.

Die Messer der Schneideeinrichtung der zweiten Schneidestation sind vorzugsweise in einem Messerhalter angeordnet, der mit einer Kulisse versehen ist, in die ein in der ortsfesten Führung geführter Zapfen od.dgl. eingreift und der durch eine weitere Betätigungseinrichtung quer zur Förderrichtung verschiebbar ist. Durch diese Anordnung wird eine Verschiebung der Messer auch entlang einer bogenförmigen Führung durch eine linear bewegbare weitere Betätigungseinrichtung sichergestellt.

Die Betätigungseinrichtung der zweiten Schneidestation kann hiebei gleichfalls von einem Elektromagneten gebildet sein, der mit dem Messerhalter zusammenwirkt.

Zweckmäßig ist es, wenn sich die Länge der Messer der zweiten Schneidestation in Förderrichtung über mehrere Taktschritte der Transporteinrichtung erstreckt, so daß in dieser zweiten Schneidestation mehrere, beispielsweise drei, Gemüsestücke gleichzeitig bearbeitet werden können.

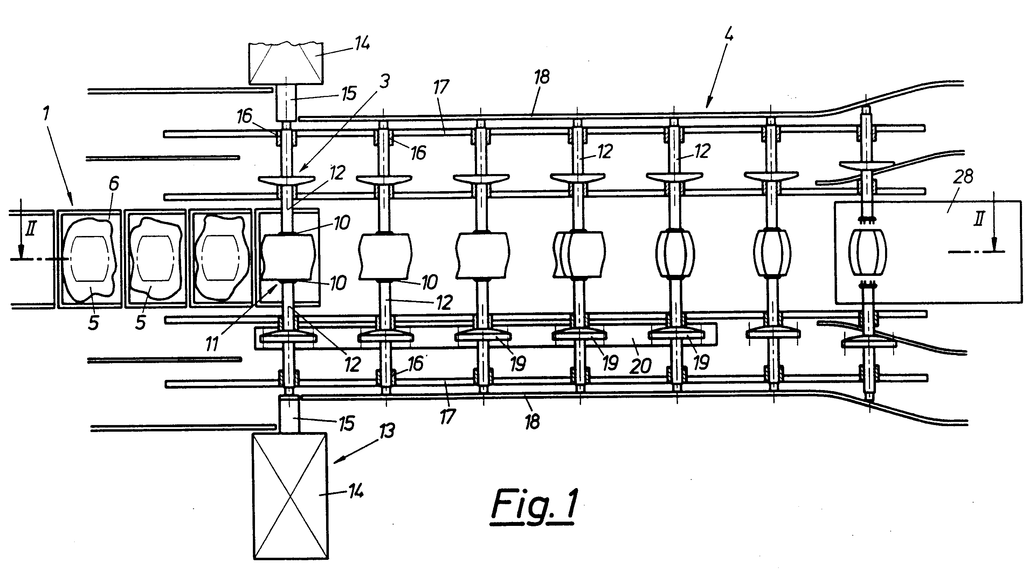

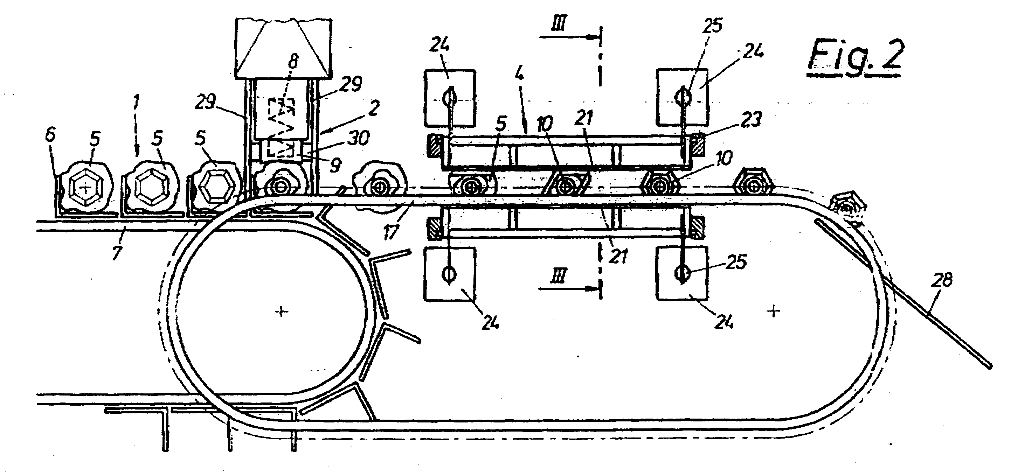

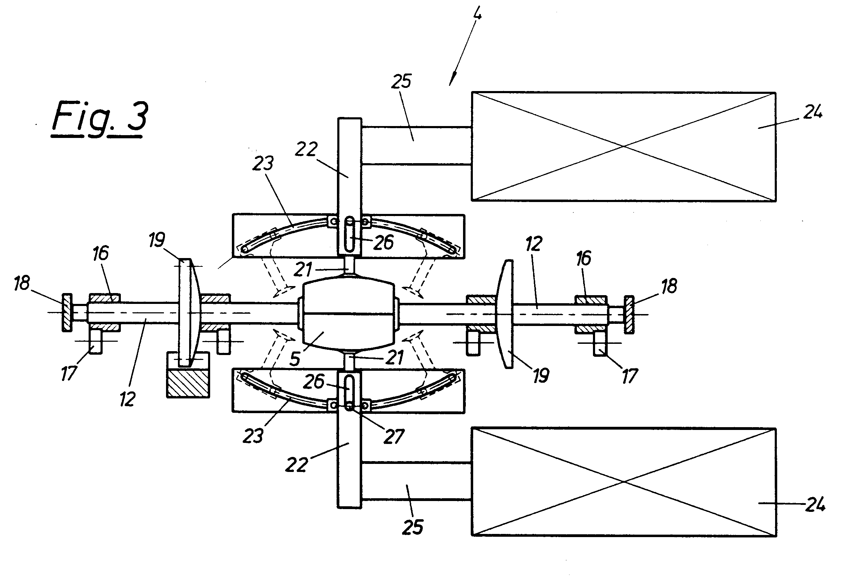

In der Zeichnung ist die Erfindung anhand eines Ausführungsbeispieles schematisch dargestellt. Fig.1 zeigt die erfindungsgemäße Vorrichtung in Draufsicht. Fig.2 stellt einen Längsschnitt durch die erfindungsgemäße Vorrichtung nach der Linie II-II in Fig.1 dar und Fig.3 zeigt einen Querschnitt durch die zweite Schneidestation nach der Linie III-III in Fig.2.

Die erfindungsgemäße Vorrichtung weist eine Aufgabestation 1, eine erste Schneidestation 2, eine Einspannstation 3, die sich an derselben Stelle wie die erste Schneidestation 2 befindet, und eine zweite Schneidestation 4 auf. In der Aufgabestation 1 werden die beispielsweise von Kartoffeln 5 gebildeten Gemüsestücke in Aufnahmen 6 eingelegt, die sich auf einem Förderband 7 befinden, das über nicht dargestellte Umlenkrollen in Taktschritten vorwärtsbewegt wird. Hiedurch gelangen die Kartoffel 5 zur ersten Schneidestation 2, wo ein durch eine Feder 8 belasteter Niederhalter 9 vorgesehen ist, durch den die im Bereich dieser ersten Schneidestation befindliche Kartoffel 5 gegen den Boden der Aufnahme 6 gepreßt und dadurch in ihrer Lage fixiert wird. Zu beiden Seiten des Niederhalters 9 befinden sich auf- und abbewegbare Messer, durch die die Kartoffel 5 an gegenüberliegenden Seiten beschnitten wird, so daß dort ebene Flächen entstehen, an welchen in der Einspannstation 3 befindliche Spannflächen 10 einer Einspanneinrichtung 11 angreifen. Die Spannflächen 10 der Einspanneinrichtung 11 sind mit abstehenden Ansätzen 12 versehen, deren freie Enden mit einer in der Einspannstation 3 vorgesehenen Betätigungseinrichtung 13 zusammenwirken. Diese Betätigungseinrichtung 13 ist von Elektromagneten 14 gebildet, deren Stößel 15 mit den freien Enden der Ansätze 12 zusammenwirken. Durch Betätigung des Elektromagneten 14 werden somit die Spannflächen 10 gegen die beschnittenen Seiten der Kartoffel gepreßt und diese somit zwischen den Spannflächen 10 eingespannt.

Nach diesem Vorgang erfolgt der Weitertransport der Kartoffeln 5 über die Einspanneinrichtung 11. Hiezu sind die Ansätze 12 in Lagerbüchsen 16 drehbar, jedoch in axialer Richtung verschiebbar gelagert, welche an Förderketten 17 festgelegt sind.

Damit die Spannflächen 10, nachdem sie in der Einspannstation 3 durch die Betätigungseinrichtung 13 in eine Lage gebracht wurden, in der zwischen ihnen eine Kartoffel eingespannt ist, diese Lage während der weiteren Bearbeitung beibehalten, wirken die freien Enden der mit diesen Spannflächen 10 verbundenen Ansätze 12 mit an die Betätigungseinrichtung 13 der Einspannstation 3 in Förderrichtung anschließenden Führungsschienen 18 zusammen, welche während der Bearbeitung der Kartoffeln 5 den Einspannvorgang sicherstellen und so geformt sind, daß sie nach erfolgter Bearbeitung die Kartoffeln 5 freigeben.

In der zweiten Schneidestation 4 werden die Kartoffeln 5 in verschiedenen Drehlagen bearbeitet. Hiezu ist es erforderlich, daß diese in der Einspanneinrichtung 11 fixierten Kartoffeln verdreht werden. Dies erfolgt dadurch, daß auf den Ansätzen 12 Zahnräder 19 drehfest, jedoch vorzugsweise in axialer Richtung verschiebbar verbunden sind, die in ortsfest angeordnete Zahnstangen 20 eingreifen. Diese Ausführungsform stellt sicher, daß synchron mit der in Taktschritten erfolgenden Vorschubbewegung eine Verdrehung der eingespannten Kartoffeln 5 erfolgt.

In der zweiten Schneidestation 4 sind zwei Messer 21 (siehe Fig.3) zu gegenüberliegenden Seiten der jeweils dort zu bearbeitenden Kartoffeln 5 vorgesehen, wobei in Fig.3 die Messer in ihrer Mittellage in voll ausgezogenen Linien und in ihren beiden Endlagen in strichlierten Linien eingezeichnet sind. Die Messer 21 sind in einem Messerhalter 22 angeordnet, der entlang einer ortsfesten bogenförmigen Führung 23 geführt ist. Entlang dieser Führung 23 werden somit die Messer 21 quer zur Förderrichtung der Kartoffeln 5 verschoben, wodurch in dem jeweils eingestellten Drehwinkelbereich eine Bearbeitung der Kartoffeln zwischen den beiden Einspannflächen erfolgt. Für das Verschieben des Messerhalters 22 sind Elektromagnete 24 vorgesehen, deren Stößel 25 mit den Messerhaltern 22 zusammenwirken. Damit trotz der linearen Bewegung der Stößel 25 der Elektromagnete 24 eine Verschiebung des Messerhalters 22 entlang der bogenförmigen Führung 23 erfolgen kann, ist der Messerhalter 22 mit einer Kulisse 26 versehen, in die ein in der ortsfesten Führung geführter Zapfen 27 od.dgl. eingreift.

Wie aus Fig.2 hervorgeht, ist die Länge der Messer 21 so bemessen, daß mehrere, im dargestellten Ausführungsbeispiel drei Kartoffeln 5 gleichzeitig in verschiedenen Drehstellungen bearbeitet werden. Beträgt der Drehwinkel, von welchem die Kartoffeln 5 durch die mit den Zahnstangen 20 zusammenwirkenden Zahnrädern 19 bei jedem Taktschritt verdreht werden, 60°, so erfolgt, wie aus Fig.2 erkennbar ist, eine vollständige Bearbeitung der Oberfläche jeder Kartoffel 5. Die aus der zweiten Schneidestation 4 austretenden Kartoffeln 5 werden von der Einspanneinrichtung 11 durch entsprechende Formgebung der Führungsschienen 18 (siehe Fig.1) freigegeben und fallen über eine Rutsche 28 in einen nicht dargestellten Behälter.

## Patentansprüche

1. Vorrichtung zur materialabhebenden Bearbeitung der Oberfläche von Gemüsestücken, insbesondere von Kartoffeln (5), mittels Schneideeinrichtungen, dadurch gekennzeichnet, daß vorzugsweise in Taktschritten bewegbare, Transporteinrichtungen (7,17) für den Transport der Gemüsestücke (5) von einer Aufgabestation (1) zu einer ersten Schneidestation (2), einer Einspannstation (3) und einer zweiten Schneidestation (4) vorgesehen sind, wobei die erste - Schneidestation (2) zwei Schneideeinrichtungen zum Beschneiden jedes Gemüsestückes (5) an gegenüberliegenden Seiten, die Einspannstation (3) eine Betätigungseinrichtung (13) für eine mit Spannflächen (10) an diesen gegenüberliegenden Seiten zur Anlage gelangende Einspannvorrichtung (11), über welche der Weitertransport der Gemüsestücke (5) erfolgt, und die zweite Schneidestation (4) eine weitere Schneideeinrichtung (21) zum Beschneiden der zwischen den in der ersten Schneidestation (2) beschnittenen Seiten befindlichen Oberfläche der Gemüsestücke (5) aufweist.

2. Vorrichtung nach Anspruch 1, dadurch gekennzeichnet, daß die Transporteinrichtung (7) für den Weitertransport der Gemüsestücke (5) von der Aufgabestation (1) zu der ersten Schneidestation (2) und der Einspannstation (3) in Förderrichtung umlaufende Aufnahmen (6) für die Gemüsestücke (5) aufweist.

3. Vorrichtung nach Anspruch 1 oder 2, dadurch gekennzeichnet, daß die Schneideeinrichtungen der ersten Schneidestation (2) aus senkrecht zur Förderrichtung auf- und abbewegbaren Messern bestehen und daß zwischen diesen Messern ein, vorzugsweise durch eine Feder (8) belasteter, Niederhalter (9) vorgesehen ist.

4. Vorrichtung nach Anspruch 1,2 oder 3, dadurch gekennzeichnet, daß die Einspanneinrichtung (11) um eine senkrecht zu den Spannflächen (10) verlaufende Achse drehbar gelagert ist und daß die Schneideeinrichtung der zweiten Schneidestation (4) aus wenigstens einem Messer (21) besteht, das in verschiedenen Drehstellungen wenigstens eines Gemüsestückes (5) zur Bearbeitung der Oberfläche desselben bewegbar ist.

5. Vorrichtung nach einem der Ansprüche 1 bis 4, dadurch gekennzeichnet, daß die Spannflächen (10) der Einspanneinrichtung (11) mit abstehenden Ansätzen (12) versehen sind, die in Lagerbüchsen (16) drehbar und in axialer Richtung verschiebbar gelagert sind und die mit Antriebsmitteln (19,20) für die Drehung der Spannflächen (10) versehen sind.

6. Vorrichtung nach einem der Ansprüche 1 bis 5, dadurch gekennzeichnet, daß die Betätigungseinrichtung (13) der Einspannstation (3) an den freien
